# EUROPEAN PATENT APPLICATION

(11) **EP 2 241 193 A1**
(43) Date of publication of application: **20.10.2010**
(21) Application number: 09158132.2
(22) Date of filing: 17.04.2009
(51) Int. Cl.: A23L 1/00, A23L 1/16, A23L 1/39, A23L 1/162

(54) **Wholegrain instant pasta**

(71) Applicant: Nestec S.A., 1800 Vevey (CH)
(72) Inventor: Battaini, Guiseppe, D-78467 Konstanz (DE)
(74) Representative: Rupp, Christian

(57) **Abstract**

The present invention relates to wholegrain instant pasta and to dehydrated food compositions which comprise said pasta. The invention also pertains to the use of wholegrain semolina having at least 95% of particles having a particle size of less than 400 microns in the manufacture of said instant pasta and to a method for making said pasta.

## Description

### Field of the invention

The present invention relates to wholegrain instant pasta and to dehydrated food compositions which comprise said pasta. The invention also pertains to the use of wholegrain semolina having at least 95% of particles having a particle size of less than 400 microns in the manufacture of said instant pasta and to a method for making said pasta.

### Background of the invention

In recent years, wholegrain and high fibre foods have proven to be one of the most promising trends in the health and wellness movement as today's health conscious consumers want to derive the maximum nutritional value from the foods they enjoy. However, despite increasingly positive attitudes towards wholegrain and fibre consumption, individuals are still not meeting their consumption targets. This is mainly due to taste limitation.

Wholegrain consists of the entire grain seed of a plant including the bran, the germ and the endosperm. The bran and germ components of the grain are generally considered to be rich in fibre, vitamins, minerals, antioxidants and healthy fats. Often and to remedy poor taste, these are the parts removed in the refining process leaving behind the energy-dense but comparatively nutrient poor endosperm portion of the grain.

Therefore quite a few food products on the market are not 100% wholegrain products but have had parts of the grain removed for taste reasons.

Pasta could be a perfect carrier for wholegrain. However, the traditional wholegrain milling approach has serious impact on the texture (sandy, rough) and has so far prevented the development of short cooking variants which can be used in combination with dehydrated food products such as soups.

Short cooking or instant pasta are known from EP 0754410A1 or WO 02/45526A2 for instance. The method of manufacture described in these documents involves extrusion and pre-cooking techniques. However, none of these documents describe the manufacture of wholegrain products and, in fact, it appears that the market is currently void of such wholegrain instant pasta.

### Object of the present invention

There is therefore a need for developing wholegrain pasta which are instant or short cooking.

### Brief description of the present invention

This object is solved by means of the independent claims. The dependent claims develop further the central idea of the invention.

Thus, in a first aspect the present invention relates to dry instant pasta comprising at least 50% wholegrain semolina, wherein at least 95% of the semolina particles have a size of less than 400 microns and to dehydrated food composition comprising said dry instant pasta.

In a further aspect, the invention relates to the use of wholegrain semolina having at least 95% of particles having a particle size of less than 400 microns in the manufacture of instant pasta composition.

Finally, a method for making instant pasta comprising the steps of:
a. Mixing wholegrain semolina having at least 95% of particles having a particle size of less than 400 microns with at least water,
b. Extruding the mixture through an extrusion die having a thickness of at most 0.6mm to give an extruded mass and
c. Pre-cooking the extruded mass to give said instant pasta
also forms part of the present invention.

### Detailed description of the present invention

Unless otherwise indicated, all percentages in the present description are percentages by weight on a dry matter basis. By "dry matter basis" is meant by reference to the final dry pasta composition of the invention.

The present invention relates to a dry pasta composition. By pasta is to be understood an unleavened kneaded and extruded dough composition made principally of wheat. Pasta is to be differentiated from noodles, since noodles are based on flours with lower protein content and are not formed by extrusion but by sheeting and cutting or stretching.

The pasta of the invention comprises at least 50% wholegrain semolina. Semolina is defined as the milled product of wheat. It generally refers to the coarse milled middling of wheat. The wheat used may be durum wheat, hard wheat, soft wheat etc. Preferably, it is durum wheat.

By "wholegrain" is meant that the intact, ground, cracked or flaked caryopsis of the grain, whose principal anatomical components - the starchy endosperm, germ and bran - are present in the same relative proportions as they exist in the intact caryopsis. Thus, the wholegrain semolina contains the bran, the germ and the endosperm of the wheat in the same proportions as the intact wheat.

Contrary to several products which claim to be wholegrain but have been produced by de-hulling and grinding the wheat, thus eliminating the bran, the present pasta of the invention are made with truly "wholegrain" semolina and thus offer the many advantages and health benefits to the consumer which grains in their entirety have been known to confer.

By measuring the amount of fibre and ash in the wholegrain semolina, it is possible to determine whether the semolina used in products is wholegrain in the sense of the invention, or whether some parts of the grains have been removed during processing. A skilled person would be able to measure the fibre content for example by using the AOAC 985.29 method. The skilled person would also be able to measure the ash content by ISO methods via thermal ashing for example.

In the present pasta, at least 95% of the semolina particles have a size of less than 400 microns. Preferably, at least 99% of the semolina particles have a size of less than 400 microns.

In a preferred embodiment, at least 95%, preferably at least 99% of the semolina particles have a size of less than 350 microns. Such semolina can be obtained by a multi-stage milling process. It can also be obtained commercially for example under the name of SnowWheat from Kampffmeyer Food Innovation GmbH.

Semolina particle size can be measured by ISO methods via sieve analysis.

Such a homogeneously milled semolina as is used in the present invention offers a number of advantages in terms of production of wholegrain pasta. Indeed, it has been found by the present inventors that by using such a semolina, wholegrain pasta suitable for instant applications can be produced without the technical difficulties which are normally encountered when using traditionally milled wholegrain semolina.

Indeed, contrarily to standard durum semolina, traditionally milled 100% wholegrain semolina generally contains inhomogeneous particle distributions with a considerable proportion coming from the bran with a dimension of greater than 1000 microns. This can lead to blockage of the extruder especially when producing thin-walled pasta, such as instant pasta.

Further advantages of using homogeneously milled wholegrain semolina according to the invention include improvement of the organoleptic properties of the final pasta. Indeed, the texture of the pasta has been found much more appealing than that of traditional wholegrain pasta. Additionally, it has been found that the shelf-life and stability of pasta obtained according to the invention are also considerably improved.

The pasta of the invention preferably comprises at least 70%, more preferably at least 80%, even more preferably at least 90% wholegrain semolina.

In a preferred embodiment, the amount of wholegrain semolina present in the pasta represents at least 90%, preferably at least 95% of the starch content of the pasta. Most preferably, it represents 100% of the starch content of the pasta. Such pasta can advantageously be labelled as being "100% wholegrain" since no further source of starch is present and since the proportions of bran, germ and endosperm are the same as in the intact wheat grain.

The pasta of the invention is instant pasta. Instant pasta, also known as short cooking pasta, is characterised by a preparation time which is at most 5 minutes when cooked or soaked in boiling water. Thus, such dry pasta has a much shorter cooking time than traditional dry pasta which requires more than 5 minutes, typically about 8-12 minutes for cooking in boiling water.

Instant pasta is characterised by a partially gelatinised starch matrix. This is due to the pre-cooking step which is used in the manufacture of said pasta.

The pasta of the invention may also be characterised by a wall thickness of at most 0.6mm. Such a wall thickness contributes to the instant character of the pasta. Indeed, such thin walls considerably reduce the cooking duration in a subsequent cooking step. The pasta may have a hollow cross-section or may be flat or in the shape of a spiral or a rollini for example.

The pasta of the invention is dry. Thus, the pasta preferably has a water content of at most 10%, more preferably at most 5%.

Other ingredients of the pasta of the invention may include egg, wheat, gluten and bran from cereals such as oat etc. Preferably, these further ingredients, if present, are comprised in the present pasta in an amount of 3-30%.

In the present invention, the pasta preferably comprises at least 1% ash content. Typically, the ash content is 1.2-1.8%.

The pasta of the invention preferably comprises at least 8% fibre, typically about 9-10%.

The pasta of the invention is particularly suited to be used in dehydrated food applications. Thus, a dehydrated food composition comprising dry instant pasta according to the invention also forms part of the invention.

By dehydrated food compositions are meant compositions which can be reconstituted with water. Such food compositions may be selected from soups or pasta-based meals for example. Such dehydrated food compositions preferably have a maximum preparation time of 5 minutes upon cooking or reconstitution with hot water.

A further aspect of the present invention relates to the use of wholegrain semolina having at least 95%, preferably at least 99% of particles having a particle size of less than 400 microns, preferably less than 350 microns in the manufacture of instant pasta.

Preferably the instant pasta comprises at least 50%, more preferably at least 70%, even more preferably at least 80%, most preferably at least 90% wholegrain semolina.

In a preferred embodiment, the amount of wholegrain semolina present in the pasta represents at least 90%, preferably at least 95% of the starch content of the pasta. Most preferably, it represents 100% of the starch content of the pasta.

A method for making instant pasta is also part of the present invention. The method of the invention comprises the first step of mixing wholegrain semolina having at least 95% of particles, preferably at least 99% of particles having a particle size of less than 400 microns, preferably less than 350 microns with at least water.

The mixing may be done by any known method in the art. The amount of semolina used is preferably such that the resulting instant pasta comprises at least 50%, more preferably at least 70%, even more preferably at least 80%, most preferably at least 90% wholegrain semolina.

The wholegrain semolina is mixed with water and optionally with further ingredients selected from egg, wheat, gluten, bran from cereal such as oats, etc. Such ingredients are typically added in an amount such that they do not exceed 30%, preferably 10%, more preferably 5% of the instant pasta.

The mixture is then extruded through an extrusion die having a thickness of at most 0.6mm to give an extruded mass. The dies may vary widely in geometry but will provide pasta having a wall thickness of at most 0.6mm. The extruding step is preferably carried out at room temperature. The extrusion temperature is typically between 45-55°C.

In a final step, the extruded mass is pre-cooked. Such pre-cooking step may be carried out by boiling the extruded mass in water or steaming for example. By the term "pre-cooking" is meant that the pasta is only partially cooked such that the starch matrix is not fully gelatinised. Typically, the pre-cooking step is carried out by boiling or steaming the extruded mass for less than 5 minutes. The pre-cooked mass may then be dried to form a dry instant pasta according to the present invention.

The present invention is illustrated further herein below by means of the non-limiting examples.

### Examples

Typical compositions for the dry instant pasta of the present invention are shown in the tables below:

| **Composition/100g** **of final product** | **Example 1** | **Example 2** |
|---|---|---|
| SnowWheat Semolina | 95 | 91 |
| Egg whole liquid | 0 | 1 |
| Protein wheat | 0 | 3 |
| Water | 5 | 5 |

| **Nutritional** **analysis /100g of final product** | **Example 1** | **Example 2** |
|---|---|---|
| Proteins (g) | 13,7 | 16,3 |
| Lipids (g) | 1,6 | 2,6 |
| Carbohydrates (g) | 68,7 | 62,6 |
| Fibre (g) | 9,6 | 9,2 |
| Energy | 344 kcal | 339 kcal |

### Example 3

Typical particle size distribution of wholegrain semolina particles used in the present invention are compared in the following table to wholegrain semolina particles obtained by traditional milling process.

| | **Semolina** **particles used in the present invention** | **Traditionally** **milled semolina particles** |
|---|---|---|
| > 1.000 µm in % | | 10,0 - 14,0 |
| > 500 µm in % | | 2,0 - 6.0 |
| < 500 µm in % | | 82,0 - 90,0 |
| > 400 µm in % | | |
| > 315 µm in % | 70,9 - 75,3 | |
| > 250 µm in % | 10,2 - 9,1 | |
| < 250 µm in % | 18,9 - 15,6 | |
| > 200 µm in % | | |
| < 200 µm in % | | |
| > 100 µm in % | | |
| < 100 µm in % | | |

## Claims

1. Dry instant pasta comprising at least 50% wholegrain semolina, wherein at least 95% of the semolina particles have a size of less than 400 microns.

2. Instant pasta according to claim 1, wherein the pasta composition comprises at least 70%, preferably at least 80%, more preferably at least 90% wholegrain semolina.

3. Instant pasta according to claims 1 or 2 having a water content of at most 10%, preferably at most 5%.

4. Instant pasta according to any of claims 1 to 3, wherein the pasta has a wall thickness of at most 0.6mm.

5. Instant pasta according to any of the preceding claims, wherein the pasta composition comprises further ingredients selected from egg, wheat, gluten, bran from cereals such as oat.

6. Instant pasta according to any of the preceding claims, wherein the pasta comprises at least 1% ash content.

7. Instant pasta according to any of the preceding claims, wherein the pasta comprises at least 8% fibre.

8. Dehydrated food composition comprising dry instant pasta according to any of the preceding claims.

9. Dehydrated food composition according to claim 8, which is selected from soup or pasta-based meal.

10. Use of wholegrain semolina having at least 95% of particles having a particle size of less than 400 microns in the manufacture of instant pasta.

11. Use according to claim 10, wherein the instant pasta composition comprises at least 50%, preferably at least 70%, more preferably at least 80%, even more preferably at least 90% wholegrain semolina.

12. Method for making instant pasta comprising the steps of:
a. Mixing wholegrain semolina having at least 95% of particles having a particle size of less than 400 microns with at least water,
b. Extruding the mixture through an extrusion die having a thickness of at most 0.6mm to give an extruded mass and
c. Pre-cooking the extruded mass to give said instant pasta.

13. Method according to claim 12, wherein the instant pasta comprises at least 50%, preferably at least 70%, more preferably at least 80%, even more preferably at least 90% wholegrain semolina.

14. Method according to claims 12 or 13, wherein the extruding step is carried out at room temperature.

15. Method according to any of claims 12 to 14, wherein the pre-cooking is carried out by boiling or steaming the extruded mass for less than 5 minutes.
